Europäisches Patentamt

European Patent Office

Office européen des brevets

(19)

(11) Veröffentlichungsnummer: **0 327 094**
**A1**

## EUROPÄISCHE PATENTANMELDUNG

(21) Anmeldenummer: 89101826.9

(22) Anmeldetag: 02.02.89

(51) Int. Cl.4: **B25J 9/04 , B25J 9/08 , B25J 9/10 , B25J 19/00**

(30) Priorität: 02.02.88 DE 3803038

(43) Veröffentlichungstag der Anmeldung:
09.08.89 Patentblatt 89/32

(34) Benannte Vertragsstaaten:
DE ES FR GB IT SE

(71) Anmelder: **NOKIA MECHATRONICS GMBH**
**Tegernseer Landstrasse 161**
**D-8000 München(DE)**

(72) Erfinder: **Beyer, Hasso**
**Kreuzeckstrasse 9**
**D-6900 Augsburg(DE)**
Erfinder: **Meissner, Hans-Georg, Dr. Ing.**
**Dr.-Schreyer-Strasse 15**
**D-8214 Bernau a. Ch.(DE)**

(74) Vertreter: **Liesegang, Roland, Dr.-Ing. et al**
**FORRESTER & BOEHMERT**
**Widenmayerstrasse 4**
**D-8000 München 22(DE)**

(54) Industrieroboter.

(57) Ein Industrieroboter mit einem ersten Arm (12) und einem zweiten Arm (24), welcher an seinem freien Ende eine Roboterhand (30) trägt, weist zwei baugleiche, längenveränderbare Antriebe (5,6) auf, wobei der Antrieb (5) für den ersten Arm (12) mit einem Lagerbock (10) dafür ein geschlossenes Gelenkviereck bildet, und der Antrieb (6) für den zweiten Arm zusammen mit dem ersten Arm und dem zweiten Arm ebenfalls ein geschlossenes Gelenkviereck bildet. Ein passives Antriebselement (36) ergänzt die Wirkung des Antriebes (5) für den ersten Arm.

Fig. 1

EP 0 327 094 A1

## Industrieroboter

Die Erfindung betrifft einen Industrieroboter mit den Merkmalen des Oberbegriffs des Anspruchs 1 (DE-A-25 45 671).

Roboter dieser Bauart weisen hohe dynamische Genauigkeit beim Anfahren von vorgegebenen Arbeitspunkten auf. Auch sind solche Roboter stabil insofern, als sie bei Wegnahme von Antriebs- oder Bremsmomenten die momentane Lage beibehalten und nicht aufgrund der Schwerkraft "zusammenfallen".

Ein solcher Roboter gehört zu der Bauart mit "geschlossener Gelenkkette".

Gewöhnlich benötigen Roboter mit geschlossener Gelenkkette jedoch ein im Vergleich zum Arbeitsbereich großes Bauvolumen und großen Bauaufwand. Es muß nämlich zusätzlich zum ersten Arm ein Lenker zur Führung des zweiten Arms vorgesehen sein, der an einem zusätzlichen Gelenkpunkt am Lagerbock angelenkt ist, um so ein geschlossenes, in allen Betriebslagen stabiles Gelenkviereck zu bilden.

Bei einem bekannten Roboter der im Oberbegiff des Anspruchs 1 beschriebenen Art liegt die zweite Achse, um welche der erste Arm am Lagerbock schwenkbar ist, auf gleichem Niveau wie der untere Anlenkpunkt des ersten Antriebes am (drehbaren) Fuß des Roboters. Aufgrund dieser Anordnung verläuft die Kraftrichtung des ersten bzw des zweiten Antriebes in etwa quer, d.h. radial, zum Schwenkkreis des Schenkels des ersten Armes, was hinsichtlich der erzielbaren Schwenkwege und des Kraftaufwandes ungünstig ist (DE-A-25 45 671).

Der Erfindung liegt die Aufgabe zugrunde, hier Abhilfe zu schaffen und einen Industrieroboter der im Oberbegriff des Anspruchs 1 beschriebenen Art so auszubilden, daß die Vorteile der Bauart mit offener Gelenkkette und der Bauart mit geschlossener Gelenkkette so miteinander vereinigt sind, daß ein hoher Schwenkweg der Arme des Roboters mit kleinem Kraftaufwand der Antriebe erzielbar ist.

Zur Lösung dieser Aufgabe sind gemäß der Erfindung die Merkmale des Patentanspruchs 1 vorgesehen.

Eine konkrete vorteilhafte Ausführung des Lösungsprinzips nach Anspruch 1 ist in Anspruch 2 angegeben.

Bei dem Roboter nach der Erfindung fungieren die zweiten und dritten Antriebe selbst als längenveränderbare, zusätzliche Lenker, so daß eine Konstruktion mit zwei aneinander angekoppelten, geschlossenen Gelenkvierecken in platzsparender Bauweise geschaffen sind. Es lassen sich infolgedessen mit dem Industrieroboter nach der Erfindung die Vorteile der höheren Genauigkeit und der größeren Stabilität von Robotern der Bauart mit geschlossener Gelenkkette realisieren, wobei jedoch der Arbeitsbereich im Vergleich zum Platzaufwand in einer Weise erweitert ist, wie sie sonst nur bei Robotern der Bauart mit offener Gelenkkette bekannt war. Grund dafür ist unter anderem, daß bei einem Industrieroboter nach der Erfindung große Bewegungen der beiden Arme auch in deren Grenzbereichen kinematisch voneinander völlig unabhängig mit kleinem Kraftaufwand realisierbar sind.

Eine besonders vorteilhafte Ausgestaltung des Industrieroboters nach der Erfindung zeichnet sich durch die Merkmale des Anspruchs 3 aus. Dieser Zusatzantrieb ist vorzugsweise ein passives Antriebselement, wie eine Schraubenfeder, ein pneumatischer oder hydraulischer Zylinder oder dgl..

Ein Zusatzantrieb in Gestalt einer Zugfeder ist aus der DE-A-25 45 671 an sich bekannt, der dort jedoch unterhalb des oberen Anlenkpunktes des zweiten Antriebs angreift, was zu anderen Kraftverhältnissen führt.

Aufgrund der Verwendung gleicher Antriebe läßt sich die Herstellung, Wartung und Lagerhaltung erheblich gegenüber üblichen Industrierobotern verbessern, bei denen jeder Achse Antriebe unterschiedlichen Leistungsvermögens zugeordnet sind.

Bei einer bevorzugten konstruktiven Ausführung eines Industrieroboters nach der Erfindung ist der Zusatzantrieb zwischen dem ersten Arm und dem Lagerbock angeordnet und wirkt dem zweiten Antrieb entgegen, wenn dieser den Arm ausschwenkt. Der Zusatzantrieb kann wie eine Zugfeder wirken. Ist der Roboter an der Decke herabhängend montiert, so wirkt der Zusatzantrieb vorteilhaft in gleicher Richtung wie der zweite Antrieb, d.h. als Druckfeder. Es ist jedoch eine Ausführung bevorzugt, bei der der Zusatzantrieb eine vorgespannte Schraubendruckfeder aufweist, die in einer Hülse zwischen einem beweglichen Federteller und einem Boden der Hülse aufgenommen ist.

Jeder der baugleichen Antriebe weist vorteilhaft eine parallele Anordnung aus einem Elektromotor und einem Spindeltrieb auf, die über ein Getriebe miteinander gekoppelt sind, das konstruktiv am günstigsten an einem Ende von Elektromotor und Spindeltrieb angeordnet ist und z.B. ein Stirnradgetriebe, ein Riementrieb oder dgl. sein kann. Diese Konstruktion ermoglicht eine platzsparende Unterbringung und Lagerung insbesondere bei einer beidseits einer vertikalen Längsmittelebene symmetrischen Ausgestaltung des Industrieroboters mit zwei Lagerbockteilen und zwei daran beidseitig des ersten Armes angeordneten passiven Antriebselementen, wobei der Ansatz und der Schenkel zur platzsparenden Unterbringung und Lagerung der unteren Enden der ersten und zweiten Antriebe gegabelt sind.

Auch der erste Antrieb läßt sich platzsparend in einer Aussparung eines Lagerbockteiles unterbringen.

Die Erfindung ist im folgenden anhand schematischer Zeichnungen an Ausführungsbeispielen mit weiteren Einzelheiten näher erläutert. Es zeigen:

Fig. 1 eine Schemadarstellung eines Industrieroboters nach der Erfindung;

Fig. 2,3 und 4 drei unterschiedliche Stellungen eines Armes des Roboters nach Fig. 1;

Fig. 5 und 6 Seitenansicht und Rückansicht eines ausgeführten Industrieroboters nach der Erfindung;

Fig. 7 und 8 Rückansicht und Seitenansicht, beide teilweise geschnitten, eines Antriebes, der baugleich für die Erzeugung der Antriebsbewegungen um die erste, zweite und dritte Achse des Roboters eingesetzt wird und

Fig. 9 und 10 einen Längsschnitt und eine Seitenansicht eines passiven Zusatzantriebselementes, das unterstützend dem Antrieb für die Bewegung um die zweite Achse des Roboters hinzugefügt ist.

In den Zeichnungen sind für gleiche bzw. gleichwirkende Teile durchgehend gleiche Bezugszahlen verwendet.

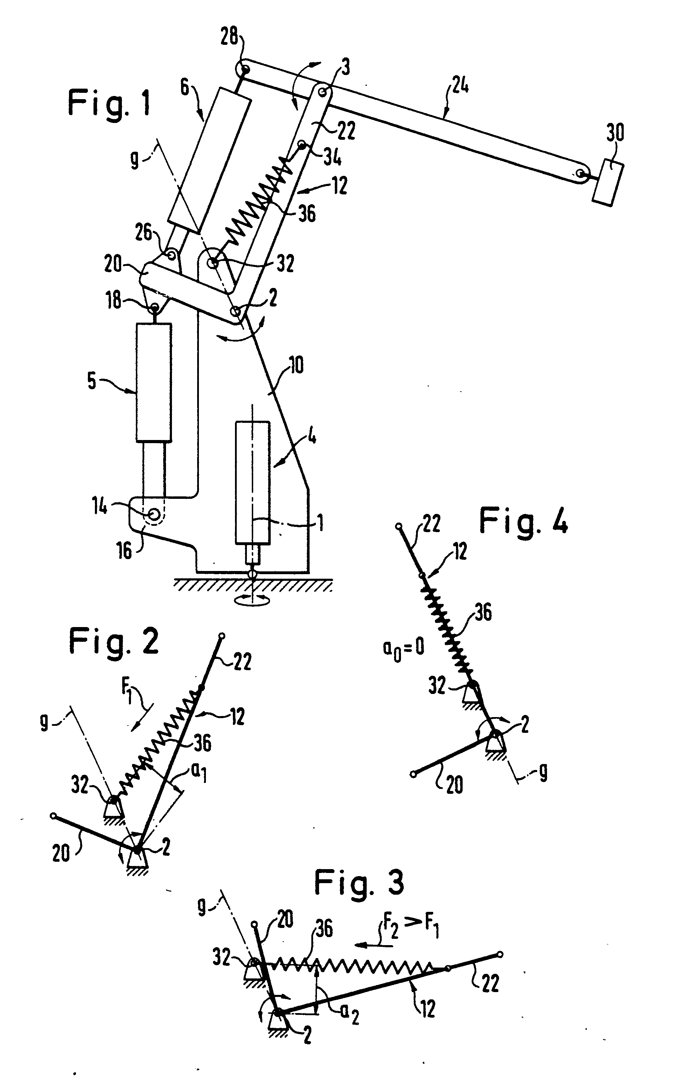

Der schematisch in Fig. 1 dargestellte Roboter weist einen Lagerbock 10 auf, der mittels eines ersten Antriebes 4 um eine erste, vertikale Achse 1 schwenkbar ist. Am Lagerbock 10 ist ein erster Arm 12 in Gestalt eines Winkelhebels um eine zweite, horizontale Achse 2 (senkrecht zur Zeichenebene der Fig. 1) mittels eines zweiten Antriebes 5 verschwenkbar, der baugleich mit dem ersten Antrieb 4 ist. Der zweite Antrieb 5 ist über einen Anlenkpunkt 14 an einem Ansatz 16 des Lagerbockes 10 und mit seinem anderen Ende an einem Anlenkpunkt 18 an einem Schenkel 20 des ersten Armes 12 angelenkt.

Am freien Ende des anderen Schenkels 22 des ersten Armes 12 ist ein zweiter Arm 24 um eine dritte, horizontale Achse 3 (senkrecht zur Zeichenebene der Fig. 1) mittels eines dritten Antriebes 6 schwenkbar, der zwischen einem Anlenkpunkt 26 an dem Schenkel 20 und einem Anlenkpunkt 28 am einen Ende des zweiten Armes 24 wirksam ist. Am anderen freien Ende trägt der zweite Arm 24 eine um beispielsweise drei weitere Freiheitsgrade bewegliche Roboterhand 30.

Zwischen einem Anlenkpunkt 32 am Lagerbock 10 und einem Anlenkpunkt 34 am Schenkel 22 des ersten Arms 12 ist ein passives Antriebselement 36 angeordnet, das im vorliegenden Fall als Schraubenzugfeder wirkt. Das passive Antriebselement 36 wirkt zusätzlich zum zweiten Antrieb 5 auf den ersten Arm 12 ein, wie nun anhand der Fig. 2 bis 4 erläutert ist.

Fig. 2 zeigt die Stellung des ersten Armes 12, die gleich wie in Fig. 1 ist. Dabei wirkt die Zugfeder mit einer Kraft $F_1$ an einem Hebelarm $a_1$ um die Achse 2, übt also ein Gegenmoment $a_1 \times F_1$ zu dem im Uhrzeigersinn drehenden, "positiven" Antriebsmoment des zweiten Antriebes 5 aus. Das Gegenmoment der Zugfeder 36 vermindert also die Wirkung des zweiten Antriebes auf den zweiten Arm 12.

Bei einer Schwenkung im Uhrzeigersinn erreicht der zweite Arm 12 schließlich seine Endlage gemäß Fig. 3. Dabei hat sich die Zugfeder gelängt, so daß eine Federkraft $F_2$ wirksam wird, die größer als die Federkraft $F_1$ in der Stellung nach Fig. 2 ist. Diese Federkraft $F_2$ wirkt am Hebelarm $a_2$ um die Achse 2 entgegen dem Antriebsmoment des zweiten Antriebes 5. Wird von dem Antrieb 5 weder ein Antriebs- noch ein Bremsmoment auf den ersten Arm 12 übertragen, so wirkt nur noch das Moment der Zugfeder 36 auf den ersten Arm 12 so lange, bis der Hebelarm der Federkraft bezüglich der zweiten Achse 2 zu Null geworden ist. Diese Stellung ist dann erreicht, wenn die Achsenlage des Schenkels 22 mit der Verbindungsgeraden g zwischen der Achse 2 und dem unteren Anlenkpunkt 32 der Zugfeder 36 zusammenfällt (Fig. 4). In dieser Totpunktlage ist der Zusatzantrieb 36 also wirkungslos. Bei einer Drehung des ersten Armes 12 entgegen dem Uhrzeigersinn über die Lage nach Fig. 4 hinaus ändert sich die Vorzeichenrichtung des von der Zugfeder 36 ausgeübten Momentes derart, daß nun das Federmoment das mittels des Antriebes 5 im Uhrzeigersinn aufgebrachte Antriebsmoment verstärkt. Dies könnte dadurch vermieden werden, das die Stellung nach Fig. 4 als linke Grenzstellung des ersten Armes 12 gewählt wird.

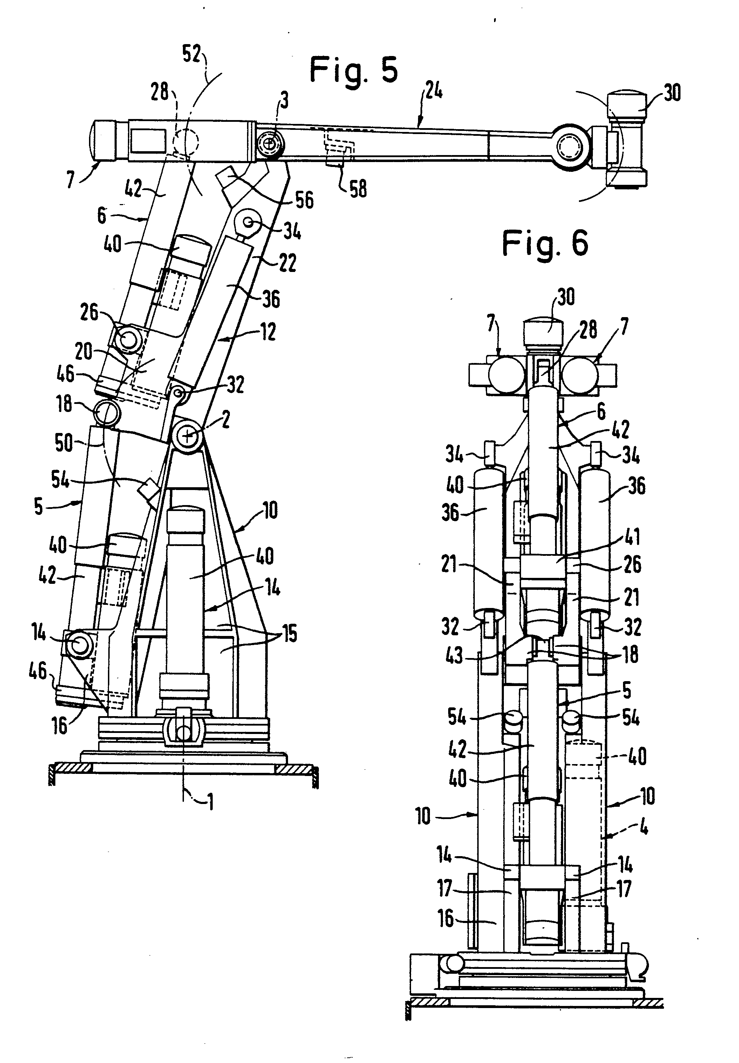

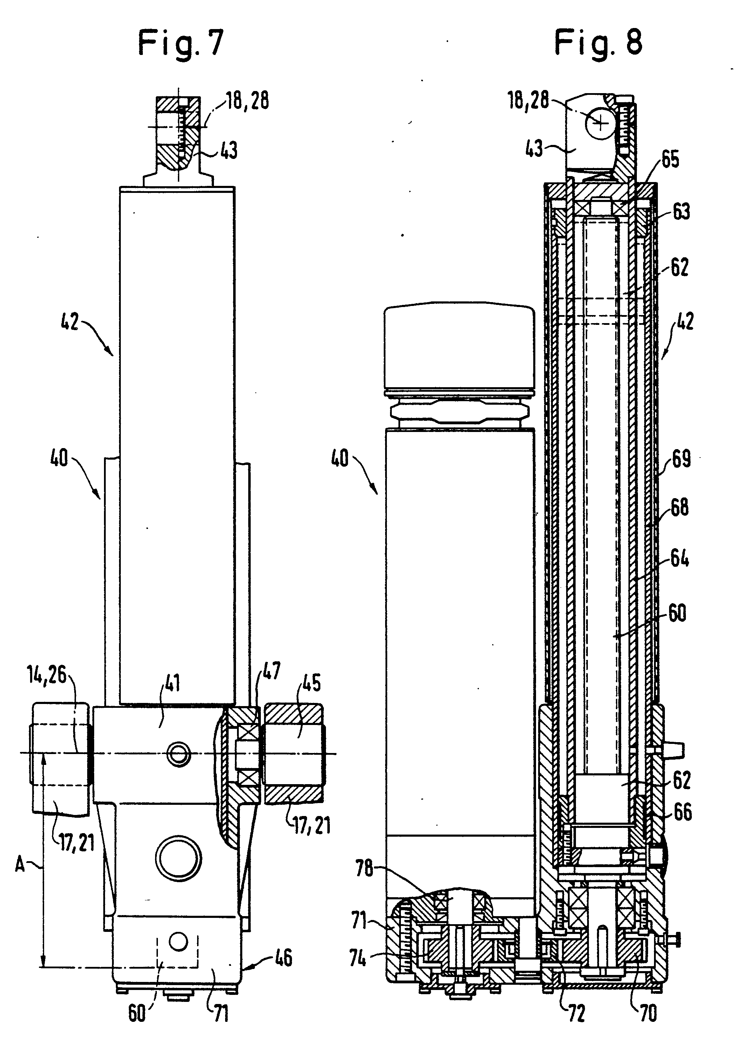

Die ausgeführte Konstruktion nach den Figuren 5 und 6 ist nach dem in Fig. 1 gezeigten Schema aufgebaut. Anhand der Fig. 1 schon beschriebene, mit gleichen Bezugszeichen versehene Teile sowie die Funktion sind zur Vermeidung von Wiederholungen nicht nochmals beschrieben. Jedoch erkennt man in den Fig. 5 und 6 einige zusätzliche Details. So ist zunächst erkennbar, daß der zweite Antrieb 5 und der dritte Antrieb 6 jeweils zwei parallel angeordnete Elemente aufweist, nämlich einen Elektromotor 40 und eine längenveränderbare Strebe 42 in Form eines Spindeltriebes, wobei die Verbindung dieser beiden Elemente durch ein am Fuß angeordnetes Stirnradgetriebe 46 hergestellt wird. Im einzelnen ist die Baugruppe aus Motor 40, Strebe 42 und Stirnradgetriebe 46 in den Fig. 7 und 8 dargestellt und anhand dieser Figuren im folgenden noch erläutert.

Die Strebe 42 hat einen Lageransatz 41 zur ihrer beidseitigen Lagerung in dem gegabelten Schenkel 20 mit den beiden Gabelteilen 21 des ersten Armes 12 (vgl. Fig. 6). Die beiden Gabelschenkel 21 bilden weiter unten am Anlenkpunkt 18 eine beidseitige Lagerung für den Kopf 43 der Strebe des Antriebs 5. Die Lagerung der Strebe 42 des Antriebs 6 am zweiten Arm 24 ist ähnlich ausgebildet.

Ferner ist auch der untere Antrieb 5 in dem gabelartig ausgebildeten Ansatz 16 mit den Gabelschenkeln 17 beidseitig in gleicher Weise wie der Antrieb 6 über den Lageransatz 41 der Strebe 42 in entsprechend ausgebildeten Lagern (vgl. Fig. 7) bei 14 gelagert.

Fig. 5 zeigt, daß die Elektromotoren 40 der beiden Antriebe 5 und 6 jeweils innen zwischen den Gabelschen keln des Lagerbocks 10 bzw. des ersten Armes 12 platzsparend und parallel zu den als Lenker fungierenden Streben 42 aufgenommen sind. Es wird also für diese Motoren kein zusätzlicher Bauraum beansprucht.

Der erste Antrieb 4 zur Erzeugung der Drehbewegung des Lagerbocks 10 um die vertikale Achse 1 benötigt keine längenveränderbare Strebe, hat aber gleichwohl einen mit den zweiten und dritten Antrieben 5 und 6 baugleichen Elektromotor. Das gleiche gilt für zwei weitere, am zweiten Arm 24 symmetrisch (Fig. 6) angeordnete Antriebe 7 für die Roboterhand 30, bei denen die Antriebsmomente über Wellen und Getriebe zur Roboterhand 30 in bekannter Weise übertragen werden.

In Fig. 5 sind die Schwenkbereiche des ersten Armes 12 und des zweiten Armes 24 durch Kreissegmente 50 bzw. 52 bezeichnet. Den Aufprall dämpfende Anschläge 54 am Lagerbock 10, 56 am ersten Arm 12 und 58 am zweiten Arm 24 begrenzen die Schwenkbeweglichkeit der beiden Arme.

Die Fig. 7 und 8 zeigen im einzelnen den Aufbau der baugleichen Antriebe 5 und 6 für die beiden Arme 12 und 24.

Die aus den Elementen Antriebseinheit 40, Spindeltrieb bzw. längenveränderbare Strebe 42 und Getriebe 46 bestehenden Antriebe 5,6 sind in einem Lageransatz 41 für die Anlenkpunkte 14 bzw. 26 beidseitig über in den Gabelschenkeln 17 bzw. 21 steckende Lagerzapfen 45 in Kegelrollenlagern 47 gelagert.

Fig. 8 zeigt den Aufbau der Strebe 42 bzw. des Spindeltriebes im einzelnen mit einer Kugelgewindespindel 60 und einer darauf aufgeschraubten Spindelmutter 62 mit in die Gewinderillen zwischen diesen beiden Teilen eingefüllten Kugeln (nicht gezeigt).

Die Spindelmutter 62 ist durchgezogen in eingefahrener und gestrichelt in ausgefahrener Lage der Strebe 42 dargestellt. Die Spindelmutter 62 trägt ein ausfahrbares Strebenrohr 64 und ist über eine abdichtende Führung 66 an der Innenwand eines Schutzrohres 68 beim Ausfahren der Strebe geführt. Der Fuß der Gewindespindel 60 trägt ein Stirnrad 70, das über ein Zwischenrad 72 von einem auf der Abtriebswelle 78 des Elektromotors 40 sitzenden Stirnrad 74 mit einer Untersetzung vom 1:2,5 angetrieben wird. Das so gebildete Stirnradgetriebe 46 ist in einem Kompaktgehäuse 71 aus einer Aluminiumlegierung untergebracht, mit dem das Schutzrohr 68 fest verbunden ist und das auch den Lageransatz 41 aufweist.

Das Strebenrohr 64 trägt ein Auge 43 zur Aufnahme eines Lagerbolzens an den Anlenkpunkten 18 bzw. 28, so daß das Strebenrohr 64 zusammen mit der Spindelmutter 62 drehfest gehalten ist, mit der Gewindespindel 60 also nicht mitdrehen kann sondern bei deren Drehung sich in Achsrichtung verlagert und dabei ein fest mit ihm verbundenes äußeres Schutzrohr 69 mitnimmt. Dabei wird das Strebenrohr 64 außen über ein Gleitlager 63 abgestützt, das fest in das Ende des stehenbleibenden Schutzrohrs 68 eingepaßt ist. Das freie Spindelende ist über ein Kugellager 65 innen in dem Strebenrohr 64 gelagert.

Um schädliche Auswirkungen der im Betrieb unvermeidlichen thermischen Ausdehnung der Spindel zu vermeiden, ist der Lageransatz 41 etwa in einem Abstand A vom unteren Spindelende angeordnet, der etwa einem Viertel der gesamten Spindellänge entspricht. Dies ermöglicht der Spindel 60, sich in beide Richtungen etwa gleich auszudehnen, weil sich das Gehäuse aufgrund seines Werkstoffs Aluminium etwa doppelt so stark wärmedehnt wie die Spindel, so daß eine effektive Spindelausdehnung in beiden Richtungen ermoglicht und damit in jeder Richtung nur halb so groß ist, als wenn die Spindel an einem Ende festgehalten wäre.

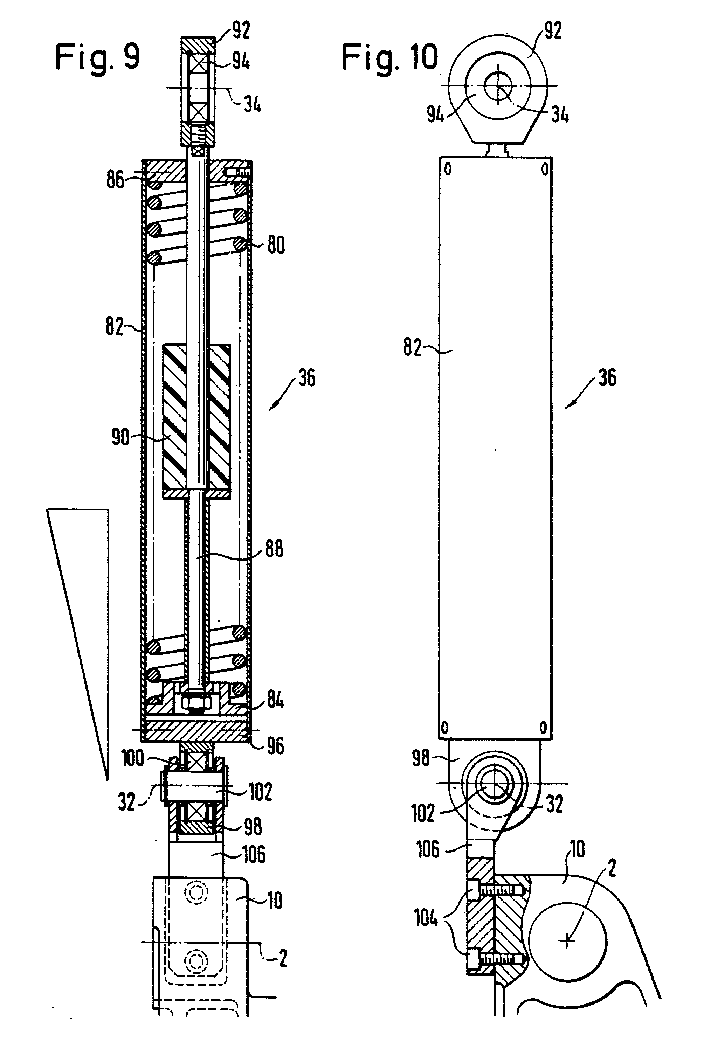

Die Fig. 9 und 10 zeigen eine ausgeführte Konstruktion des passiven Antriebselementes 36, das als Zusatzantrieb zum dritten Antrieb 5 auf den ersten Arm 12 wirkt. Eine Schraubendruckfeder 80 ist in eine Hülse 82 zwischen einem Federteller 84 und dem oberen Boden 86 der Hülse 82 aufgenommen. Der Federteller 84 ist mit einer Stange 88 verbunden, die am mittleren Bereich der Hülse ein Dämpfungselement 90 trägt und durch den oberen Boden 86 durchgeführt ist, um ein Auge 92 mit Lager 94 zur Verbindung mit einem nicht gezeigten Zapfen am Anlenkpunkt 34 des ersten Armes 12 zu bilden. Das Dämpfungselement 90 dient als Anschlag für die Begrenzung des Schwenkweges des Arms 12 im Uhrzeigersinn (in Fig. 1 oder 5 gesehen).

Am unteren Boden 96 der Hülse 82 ist ebenfalls ein Auge 98 mit Lager 100 zur Lagerung auf einem Lagerzapfen 102 vorgesehen, der in einer am Lagerbock 10 mittels Schrauben 104 befestigten Gabel 106 sitzt.

Die Schraubendruckfeder 80 ist gemäß dem neben Fig. 9 gezeichneten Hub-Federkraft-Diagramm vorgespannt.

Der beschriebene modulare Aufbau des Schwenkantriebes ermöglicht eine komplette Montage vor dem Einbau im Roboter.

Statt der Anordnung nach Fig. 9 und 10 kann auch ein passiver pneumatischer oder hydraulischer Zylinder eingesetzt werden.

## Ansprüche

1. Industrieroboter, bei dem ein um eine erste (vertikale) Achse (1) mittels eines ersten Antriebes (4) bewegbarer Lagerbock (10) einen um eine zweite (horizontale) Achse (2) mittels eines zweiten Antriebes (5) schwenkbaren ersten Arm (12) und dieser einen mittels eines dritten Antriebes (6) um eine dritte (horizontale) Achse (3) schwenkbaren zweiten Arm (24) unterstützen, welcher an seinem freien Ende eine Roboterhand (30) trägt, wobei der zweite Antrieb (5) zwischen einem unteren Anlenkpunkt (14) an einem Ansatz (16) des Lagerbocks (10) und einem oberen Anlenkpunkt (18) an einem Schenkel (20) des ersten Armes (12) und der dritte Antrieb (6) zwischen einem Anlenkpunkt (26) am Schenkel (20) und einem Anlenkpunkt (28) am zweiten Arm (24) so angeordnet sind, daß zwei geschlossene hintereinandergeschaltete Gelenkvierecke gebildet sind, von denen eines den Lagerbock (10), den zweiten Antrieb (5) und den Schenkel (20) und das andere den ersten Arm (12), den dritten Antrieb (6) und den zweiten Arm (24) umfaßt, und in denen der zweite und der dritte Antrieb (5,6) jeweils "Lenker" veränderlicher Länge bilden, dadurch **gekennzeichnet**, daß die zweite Achse (2), in welcher der erste Arm (12) am Lagerbock (10) angelenkt ist, so bezüglich des unteren Anlenkpunktes (14) angeordnet ist, daß in einer mittleren Betriebslage die Kraftrichtung des ersten bzw. zweiten Antriebes (5,6) im wesentlichen tangential zum Schwenkkreis des Schenkels (20) verläuft.

2. Industrieroboter nach Anspruch 1, dadurch **gekennzeichnet**, daß die zweite Achse (2) etwa auf der Höhe des oberen Anlenkpunktes (18), des zweiten Antriebes (5) und des unteren Anlenkpunktes (26) des dritten Antriebes (6) liegt.

3. Industrieroboter nach Anspruch 1 oder 2, dadurch **gekennzeichnet**, daß der zweite und der dritte Antrieb (5,6) baugleich sind und daß am zweiten Arm (12) ein Zusatzantrieb (36) mit seinem unteren Ende am Lagerbock (10) an einer Stelle (32) oberhalb des oberen Anlenkpunktes (18) des zweiten Antriebes (5) angreift, um fehlendes bzw. überschüssiges Moment auszugleichen.

4. Industrieroboter nach Anspruch 3, dadurch **gekennzeichnet**, daß der Zusatzantrieb ein passives Antriebselement (36), insbesondere eine Schraubenfeder, ist.

5. Industrieroboter nach Anspruch 4, dadurch **gekennzeichnet**, daß der Zusatzantrieb eine vorgespannte Schraubendruckfeder (80) aufweist, die in einer Hülse (82) zwischen einem beweglichen Federteller (84) und einem Boden (86) der Hülse aufgenommen ist.

6. Industrieroboter nach einem der Ansprüche 1 bis 5, dadurch **gekennzeichnet**, daß der zweite und der dritte Antrieb eine parallele Anordnung aus einem Elektromotor (40) und einem Spindeltrieb (42) aufweist, die über ein Getriebe (4) miteinander gekoppelt sind.

7. Industrieroboter nach einem der Ansprüche 4 bis 6, dadurch **gekennzeichnet**, daß er beidseits einer vertikalen Längsmittelebene symmetrisch mit zwei Lagerbockabschnitten (10,10) und zwei daran beidseits des ersten Arms (12) angelenkten, baugleichen passiven Antriebselementen (36) augebildet ist, wobei der Ansatz (16) und der Schenkel (20) zur platzsparenden Aufnahme und beidseitigen Lagerung (45,47) der unteren Enden des zweiten und des dritten Antriebes (5,6) gegabelt ausgebildet sind und der gegabelte Schenkel (22) außerdem zwei Lager für das obere Ende des zweiten Antriebs (5) enthält.

8. Industrieroboter nach einem der Ansprüche 1 bis 7, dadurch **gekennzeichnet**, daß der erste Antrieb (4) platzsparend in einer Aussparung (15) eines Lagerbockteiles (10) untergebracht ist.

9. Industrieroboter nach einem der Ansprüche 1 bis 8, dadurch **gekennzeichnet**, daß sämtliche Antriebe (4,5,6,7) baugleiche Elektromotoren aufweisen.

Fig. 1

Fig. 2

Fig. 3

Fig. 4

Fig. 5

Fig. 6

# Fig. 7

# Fig. 8

# Fig. 9

# Fig. 10

**Europäisches Patentamt**

# EUROPÄISCHER RECHERCHENBERICHT

Nummer der Anmeldung

EP    89 10 1826

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | WO-A-8000124 (POLHEMUS) <br> * Seite 12, Zeile 19 - Zeile 25 * <br> * Seite 13, Zeile 5 - Zeile 21 * <br> * Seite 29, Zeile 16 - Zeile 29 * | 1, 2 | B25J9/04 <br> B25J9/08 <br> B25J9/10 <br> B25J19/00 |
| Y | --- | 3-9 | |
| Y | DE-A-3316460 (KOBE SEIKO SHO) <br> * Seite 18, Zeile 29 - Seite 19, Zeile 20; Ansprüche 3, 4 * <br> --- | 3-5, 7 | |
| Y | US-A-4393920 (SHIMA) <br> * Spalte 4, Zeile 40 - Spalte 5, Zeile 17 * <br> --- | 6 | |
| Y | FR-A-2555493 (FUJI YUSOKI KOGYO) <br> * Seite 3, Zeile 24 - Zeile 31 * <br> --- | 8 | |
| Y | EP-A-0229185 (FANUC) <br> * Seite 4, Zeile 22 - Seite 5, Zeile 3 * <br> --- | 9 | |
| A | EP-A-0061153 (RICHTER) <br> * das ganze Dokument * <br> --- | 7, 9 | RECHERCHIERTE SACHGEBIETE (Int. Cl.4) |
| A | DE-A-3640075 (DOZONO) <br> ----- | | B25J |

Der vorliegende Recherchenbericht wurde für alle Patentansprüche erstellt

| Recherchenort | Abschlußdatum der Recherche | Prüfer |
|---|---|---|
| DEN HAAG | 24 APRIL 1989 | LAMMINEUR P.C.G. |